# EUROPEAN PATENT APPLICATION

(11) **EP 0 539 071 A2**
(43) Date of publication of application: **28.04.1993**
(21) Application number: 92309258.9
(22) Date of filing: 12.10.1992
(51) Int. Cl.: G01L 23/22

(54) **Knock processing circuit**

(30) Priority: 23.10.1991 GB 9122489
(71) Applicant: LUCAS INDUSTRIES PUBLIC LIMITED COMPANY, Solihull, West Midlands B91 3TX (GB)
(72) Inventor: Dearn, David, Sutton Coldfield, West Midlands (GB); Cockerham, Kevin, Sutton Coldfield, West Midlands B75 7ST (GB); Lane, Stephen, Tamworth, Staffordshire, B77 2DU (GB)
(74) Representative: Robinson, John Stuart

(57) **Abstract**

A processing circuit suitable for processing signals from a knock sensor provided on an internal combustion engine comprises two channels. Each channel comprises a bandpass filter (11, 12) and a dual phase rectifier (19, 20) for rectifying the output of the respective bandpass filter. A differential integrator (21) integrates the difference between the outputs of the channels. The relative gains of the channels can be controlled by the insertion of a variable attenuator (18) into either channel. The gains, relative gain, filter frequencies and integrator time constant are controllable from a data processor external to the processing circuit via a data bus (7) while the processing circuit is in use.

## Description

The present invention relates to a processing circuit, for instance for use in detecting knock in an internal combustion engine.

In known arrangements for detecting knock in an internal combustion engine, a flat response piezoelectric accelerometer is mounted at a resonant site on an engine block. The output of the accelerometer is processed so as to provide a signal which indicates the occurrence, and possibly the amplitude, of knock in the engine, for instance caused by excessively advanced ignition settings or incorrect air/fuel ratios.

Processing circuits for use with such knock sensors are disclosed in US 4881401 and US 4887456. In such arrangements, the knock signal from the accelerometer is filtered by a bandpass filter of fixed centre frequency and rectified so as to provide a signal whose level is indicative of the occurrence and amount of engine knock. This signal may then be compared with a reference signal representing background noise and the difference may be integrated over a plurality of time windows so as to provide a better indication of the occurrence and level of knock.

According to a first aspect of the invention, there is provided a processing circuit for use in detecting knock in an internal combustion engine, comprising a filter for filtering a signal from a knock sensor and having a filter frequency which is adjustable while the processing circuit is in use.

The filter may comprise a bandpass filter having an adjustable centre frequency. The filter may comprise a switched capacitor filter and the value of the components determining the centre frequency may be selectable. The filter may be preceded by a low pass filter for anti-aliasing purposes.

According to a second aspect of the invention, there is provided a processing circuit for use in detecting knock in an internal combustion engine, comprising: first and second channels, each of which comprises a filter for filtering a signal from a knock sensor and a rectifier for rectifying the output signal of the filter; means for varying the relative gains of the first and second channels while the processing circuit is in use; and means for subtracting the outputs of the first and second channels.

The subtracting means may be connected to an integrator, whose time constant may be adjustable while the processing circuit is in use.

The channels may have a differential topology with the rectifiers having dual phase outputs, and the integrator may be a differential integrator with the rectifier dual phase outputs being connected to the differential inputs of the integrator in such a way as to form the subtracting means.

The means for varying the relative gains may comprise a variable attenuator which is selectively insertable into the first or second channel.

Each of the filters may have a filter frequency which is adjustable while the processing circuit is in use. Each of the filters may comprise a bandpass filter, and may comprise a switched capacitor filter, the value of whose frequency-determining components is selectable. A low pass anti-aliasing filter may be provided upstream of the first and second channels.

In the case of switched capacitor filters, the clock inputs of the filters may be connected to a common clock generator.

The processing circuit may have a plurality of inputs, any one of which is selectively enablable while the processing circuit is in use.

Any combination of the relative gains, the filter frequencies, the integrator time constant, and individual channel gains may be under software control, for instance by means of a data processor external to the processing circuit.

It is thus possible to provide a processing circuit whose parameters are variable while in use so as to improve the processing of knock signals to enable improved knock detection and measurement. Such an arrangement may be embodied as an application specific integrated circuit in order to provide a compact, convenient, and inexpensive general purpose processing circuit. Such an integrated circuit may include both analog and digital circuitry. For instance digital circuitry may be included in order to provide an interface between a micro-processor and parameter setting elements of the processing circuit. Although such a circuit may advantageously be used in a knock signal processing circuit, it may be used for other purposes.

The present invention will be further described, by way of example, with reference to the accompanying drawings, in which:-
Figure 1 is a block circuit diagram of a processing circuit constituting an embodiment of the invention; and
Figure 2 is a block schematic diagram illustrating an application of the processing circuit of Figure 1.

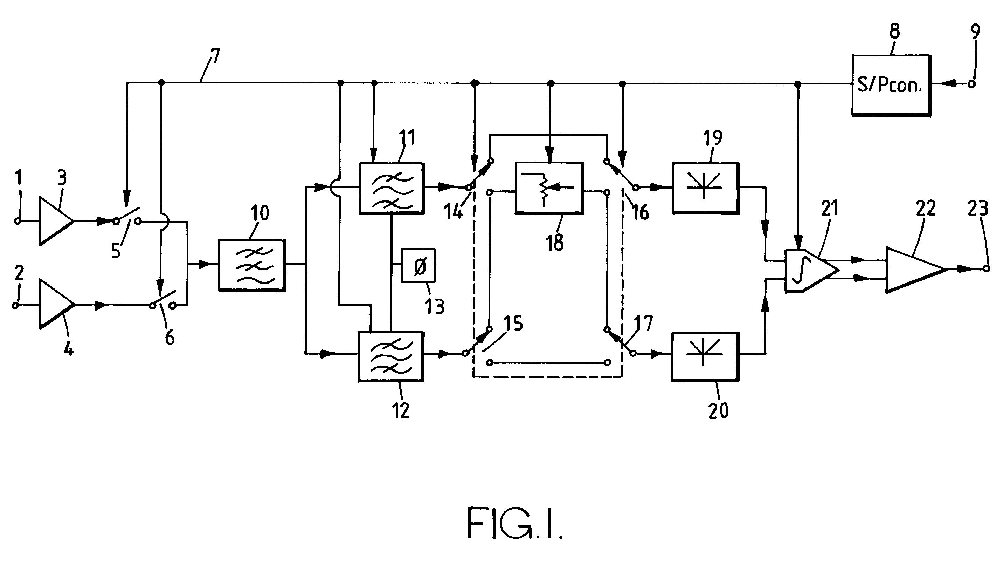

The processing circuit shown in Figure 1 has first and second inputs 1 and 2 for connection to respective knock sensors, such as flat response piezoelectric accelerometers mounted on an engine block of an internal combustion engine. The inputs 1 and 2 are connected to input amplifiers 3 and 4 whose gains are externally settable so as to match the sensitivities of the knock sensors. The outputs of the amplifiers 3 and 4 are connected to electronic switches 5 and 6, for instance in the form of MOS transmission gates. The control inputs of the switches 5 and 6 are connected to a control bus 7 which is connected to the output of a series/parallel convertor 8 whose series input is connected to an input 9 for receiving series digital control signals.

The outputs of the switches 5 and 6 are connected together and to the input of a third order low pass filter 10. The filter 10 acts as an anti-aliasing filter for the succeeding circuitry and has a cutoff frequency, for instance, of the order of 200 kHz.

The output of the filter 10 is connected to first and second switched capacitor bandpass filters 11 and 12 in first and second processing channels of the circuit. The switched capacitor filters 11 and 12 are of identical construction and are connected to a common clock generator 13. The filters 11 and 12 have respective control inputs connected to the bus 7 for independently setting the centre frequencies of the bandpass filters. The Q's of the filters 11 and 12 are fixed and of relatively low value so as to provide a relatively broad passband.

The outputs of the filters 11 and 12 are connected to an electronic switching arrangement 14 to 17 comprising a plurality of electronic switches, such as MOS transmission gates, whose operation is synchronised to form a four pole two way switch. This arrangement has a control input connected to the bus 7. A variable attenuator 18 has an attenuation control input connected to the bus 7 for setting the attenuation, and is connected to the switch arrangement 14 to 17 such that the attenuator 18 is selectively connectable in series with the output of the filter 11 or the filter 12. The outputs of the switch arrangement are connected to the inputs of first and second precision full wave rectifiers 19 and 20. The rectifiers 19 and 20 have dual phase outputs which are connected to the inputs of a differential integrator 21 having a control input connected to the bus 7 for determining the time constant of the integrator 21. The differential outputs of the integrator 21 are connected to a differential input single-ended output convertor 22 whose output is connected to an output 23 of processing circuit.

In use, the parameters of the processing circuit are set by supplying suitable digital signals, for instance from a microprocessor, via the input 9 to the series/parallel convertor 8. The convertor 8 supplies suitable signals to the bus 7 for controlling: which of the switches 5 and 6 is closed; the centre frequencies of the filters 11 and 12; the attenuation of the attenuator 18 and the channel in which it is connected; and the time constant of the integrator 21. These parameters may be set and adjusted or varied while the processing circuit is in use by supplying appropriate control signals to the input 9. Thus, the active input can be varied between the inputs 1 and 2 of the processing circuit so as to process the signals selectively from different knock sensors. The centre frequencies of the filters 11 and 12 may be varied, either together or independently of each other, in order to alter the filtering characteristics of the two channels. The relative gains of the two channels can be adjusted, for instance to provide active balancing of the channel gains. The time constant of the integrator 21 can be varied to accommodate changes in operation or in other parameters.

In addition to the differential integrator 21, the two channels are formed with a differential topology in order to reduce or substantially eliminate the effects of offsets within the processing circuit. The use of switched capacitor filters 11 and 12 makes the processing circuit substantially immune to offsets in the preceding parts of the circuit. The gain of the attenuator 18 and time constant of the integrator 21 are preferably varied by means of switched capacitor techniques. Chopper-stabilised circuitry may be used where appropriate in order to reduce or substantially eliminate individual circuit offsets and drifting of parasitic parameters. By such means, it is possible to integrate the whole of the processing circuit monolithically without the need for any inter-stage coupling capacitors. By forming the integrating capacitor of the integrator 21 within the integrated circuit, relatively long time constants can be achieved without problems of charge leakage which can otherwise occur when an external integrating capacitor has to be connected via integrated circuit terminals.

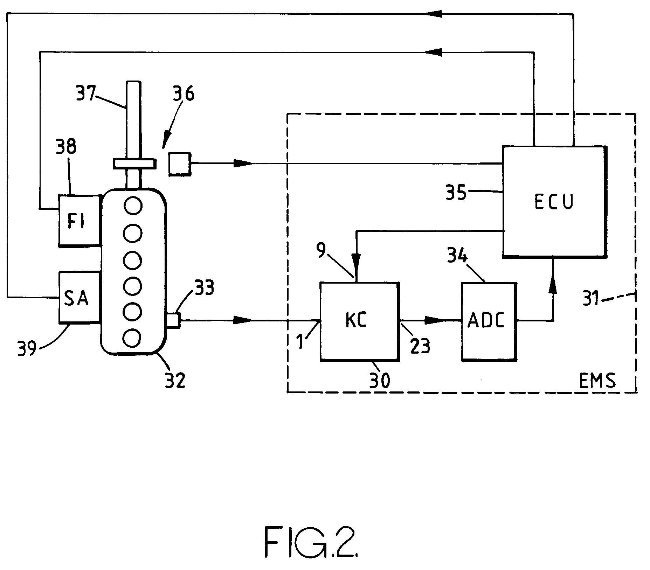

Figure 2 illustrates an application of the knock processing circuit 30 of Figure 1 in an engine management system 31 of an internal combustion engine 32. In this application, a single knock sensor 33 is shown mounted on the engine block of the engine 32, so that only one of the inputs 1 and 2 of the processing circuit is required. The corresponding switch 5 is thus closed and the switch 6 for the other input is kept open.

The output 23 of the circuit 30 is connected to the input of an analog/digital convertor 34 whose output is connected to an input of an electronic control unit 35. The electronic control unit 35 includes a micro-controller and has a digital series output connected to the control input 9 of the circuit 30.

The electronic control unit 35 has an input connected to an engine speed sensor 36, for instance comprising a variable reluctance transducer cooperating with a toothed wheel mounted on an output shaft 37 of the engine 32. The electronic control unit 35 has first and second engine control outputs connected to a fuel injection system 38 and an ignition control system 39.

Further inputs and outputs of the engine management system 31 are not shown for the sake of clarity.

In use, the engine management system 31 determines the quantity and strength of a combustible mixture supplied to the engine 32 by the fuel injection system 38. The engine management system further controls the ignition timing, such as the spark advance angle for a spark ignition or petrol engine.

The processing circuit 30 processes the output signals of the knock sensor 33 and provides at its output 23 a signal representing the level of engine knock. This is converted into a digital signal by the convertor 34 and supplied to the electronic control unit 35, for instance so as to cause the fuelling or ignition timing of the engine 32 to be adjusted so as to prevent excessive engine knock.

The electronic control unit 35 sets the parameters of the processing circuit 30 as mentioned hereinbefore. The parameters of the processing circuit may be varied by the electronic control unit in order to implement various strategies for processing the output signals of the knock sensor 33. Some possible strategies will be described hereinafter.

In order to initialise operation of the processing circuit 30, the electronic control unit 35 holds the switch 5 closed and the switch 6 opened and sets the centre frequency of the filter 11 to correspond with the expected frequency of a signal representing knock. The centre frequency of the filter 12 is set to a different value well away from the knock signal frequency. Thus, the first channel is sensitive mainly to the knock signal whereas the second channel including the filter 12 is sensitive to background noise but relatively insensitive to knock. The relative gains of the two channels are set to an initial value and the time constant of the integrator 21 is set to a suitable initial value. The time constant of the integrator may be made adjustable with engine speed and/or load and/or background noise to enable good signal to noise ratio to be obtained throughout the circuits.

The rectifiers 19 and 20 thus provide signals representing the envelope of the knock signal and the envelope of background noise, and the difference between these signals is integrated by the integrator 21 and supplied via the convertor 22 to the output 23. The integrator 21 is periodically reset so as to define a plurality of consecutive measurement time windows.

In the absence of engine knock, the output signals of the rectifiers 19 and 20 will be substantially the same, so that the output of the integrator will be relatively low. However, when engine knock occurs, the envelope signal from the rectifier 19 will be substantially greater than that from the rectifier 20, so that an increasing signal will be provided by the integrator 21. This is periodically sampled by the electronic control unit 35 and, if engine knock is excessive, remedial action may be taken, for instance by varying the fuelling and/or ignition timing of the engine.

In order to ensure that the gains of the two channels are substantially matched and the output of the integrator 21 is relatively low in the absence of knock, the electronic control unit 35 periodically varies the centre frequency of the filter 11 and/or the filter 12 so that the centre frequencies coincide. The electronic control unit 35 then varies the relative gains of the two channels by varying the attenuation of the attenuator 18 and switching the attenuator into the first or second channel as necessary, while monitoring the output of the processing circuit 30. The channel gains will be substantially matched when the output of the processing circuit is at a minimum.

In cases where the knock signal frequency varies with engine speed, the electronic control unit may be arranged to vary the centre frequency of the filter 11 in accordance with engine speed as determined by the sensor 36. For instance, the electronic control unit 35 may store a map of centre frequency against engine speed so as to ensure that the centre frequency of the filter 11 is arranged to correspond optimally with the frequency of the knock signal.

In order to provide an adaptive system for establishing the centre frequency of the filter 11, the electronic control unit 35 periodically varies the fuelling and/or ignition timing so as to cause engine knock to occur in the engine 32. During this phase of operation, the electronic control unit 35 then varies the centre frequency of the filter 11 while monitoring the output of the circuit 30. The centre frequency corresponding to maximum output is then chosen for the prevailing operating conditions of the engine, whose fuelling and ignition timing are returned to their normal operating values. The centre frequency may then be stored in a map against various operating parameters of the engine, for instance engine speed and load demand. The map may comprise a fixed pre-programmed section and an update schedule for correcting the pre-programmed values, for instance established by testing an engine of the same type on a test bed.

It is thus possible to provide a processing circuit which, while capable of being used in a conventional manner, may also be used to permit improved knock detection strategies to be implemented. The whole processing circuit is capable of integration to form a module which may be used with advantage in both conventional and novel knock detection arrangements.

Although the processing circuit has been described for use in knock detection applications for internal combustion engines, such a processing circuit may be used in other applications.

In one embodiment of the invention, the centre frequencies of the filters 11 and 12 are adjustable between one and 20 kHz, the attenuation of the attenuator 18 is adjustable in 64 steps from an attenuation ratio of 1 to an attenuation ratio of 0.133, and the integrator time constant is programmable between 40 and 600 microseconds.

## Claims

1. A processing circuit for use in an apparatus for detecting knock in an internal combustion engine (32), the processing circuit comprising a filter (11, 12) for filtering a signal from a knock sensor (33), characterised in that the filter (11, 12) has a filter frequency which is adjustable while the processing circuit is in use.

2. A processing circuit for use in an apparatus for detecting knock in an internal combustion engine (32), characterised by: first and second channels, each of which comprises a filter (11, 12) for filtering a signal from a knock sensor (33) and a rectifier (19, 20) for rectifying the output signal of the filter (11, 12); means (14-18) for varying the relative gains of the first and second channels while the processing circuit is in use; and means (22) for subtracting the outputs of the first and second channels.

3. A processing circuit as claimed in Claim 2, characterised in that the subtracting means (22) is connected to an integrator (21) having a time constant which is adjustable while the processing circuit is in use.

4. A processing circuit as claimed in Claim 3, characterised in that the rectifiers (19, 20) have dual phase outputs and the integrator (21) is a differential integrator with the outputs of the rectifiers being connected to differential inputs of the integrator so as to form the subtracting means.

5. A processing circuit as claimed in any one of Claims 2 to 4, characterised in that the means for varying the relative gains includes a variable attenuator (18) which is selectively insertable into the first or second channel.

6. A processing circuit as claimed in any one of the preceding claims, characterised in that the or each filter (11, 12) is a bandpass filter having an adjustable centre frequency.

7. A processing circuit as claimed in any one of the preceding claims, characterised in that the or each filter (11, 12) is a switched capacitor filter.

8. A processing circuit as claimed in any one of the preceding claims, characterised in that the value of the frequency determining components of the or each filter (11, 12) are selectable.

9. A processing circuit as claimed in any one of the preceding claims, characterised in that the or each filter (11, 12) is preceded by a low pass anti-aliasing filter (10).

10. A processing circuit as claimed in Claim 7 when dependent on Claim 2, characterised in that clock inputs of the filters (11, 12) are connected to a common clock generator (13).
